# EUROPEAN PATENT APPLICATION

(11) **EP 4 198 829 A1**
(43) Date of publication of application: **21.06.2023**
(21) Application number: 22210732.8
(22) Date of filing: 01.12.2022
(51) Int. Cl.: G06N 3/063, G06N 3/0442, G06N 3/08

(54) **METHOD AND DEVICE FOR DATA CLASSIFICATION BASED ON ARTIFICIAL INTELLIGENCE IMPLEMENTED ON FPGA**

(30) Priority: 14.12.2021 IT 202100031292
(71) Applicant: MBDA ITALIA S.p.A., 00131 Roma (IT)
(72) Inventor: BORZACCHIELLO, DOMENICO, I-00131 Roma (IT); FERRARA, GIANLUIGI, I-00131 Roma (IT); PRISCO, GAETANO, I-00131 Roma (IT)
(74) Representative: Perronace, Andrea

(57) **Abstract**

The present invention relates to an IP Core FPGA, i.e., a system comprising a neural network capable of solving a whole class of problems related to deep learning. In particular, the IP Core solves classification problems based on sequences of data utilizing Recursive Neural Networks.

## Description

The present invention relates to a method and device for data classification based on artificial intelligence implemented on FPGA.

### Background art

Deep learning is the most advanced branch of machine learning. Deep Learning intelligence consists of a set of techniques based on artificial Neural Networks organized on different levels. With a sufficient amount of data, the Network becomes capable of solving complex problems autonomously, unlike the traditional Machine Learning, which instead requires prior data processing.

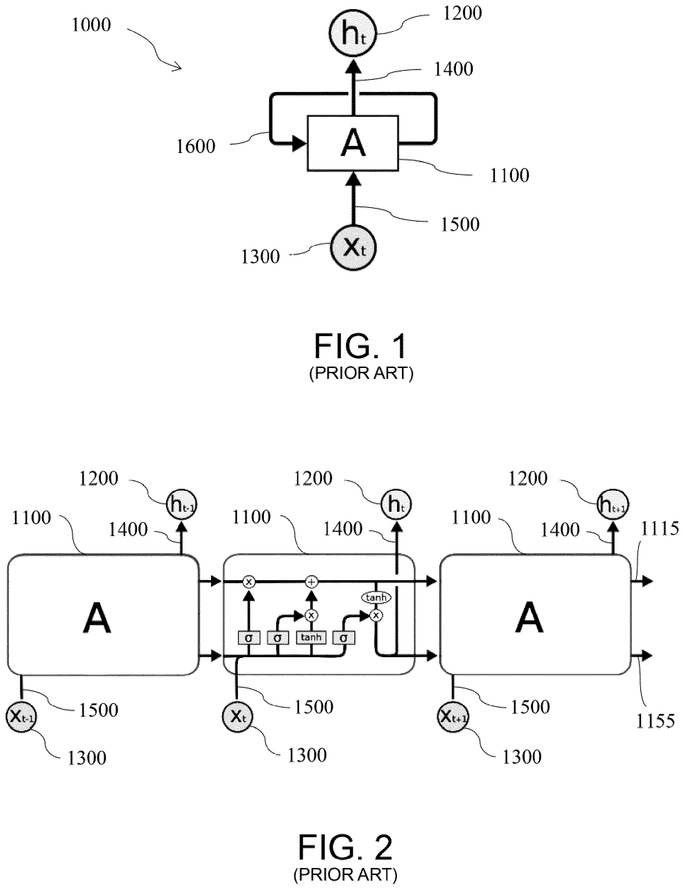

With reference to figure 1, Recursive Neural Networks (RNNs) are a type of deep learning network and allow the mutual interconnection of various network layers thereby modeling a dynamic time behavior. In detail, the network 1000 has input variables *xₜ* in block 1300, which are provided in 1500 to the main processing block 1100, with feedback function 1600, until the output is provided in 1400 as a variable *hₜ* in block 1200. This type of network is ideal for carrying out predictive and/or classification analyses on data sequences of variable length and/or not known a priori.

Recursive Neural Networks learn from the past, process current data, and prepare information for future processing operations. Each network output is the combination of the experience gained both during the training and on field during the operational scenario itself.

Long Short-Term Memory (LSTM) networks are special Recursive Neural Networks capable of learning short- and long-term time dependencies. Traditional Recursive Networks can be represented as chains of modules with a relatively simple structure consisting of only one level.

With reference to figure 2, LSTM networks have the same type of chain structure, but each module 1100 is in turn structured into 4 different levels of Neural Networks which interact with one another. Internal mechanisms referred to as "gates" regulate the flow of information, selecting the most meaningful data from a sequence of inputs.

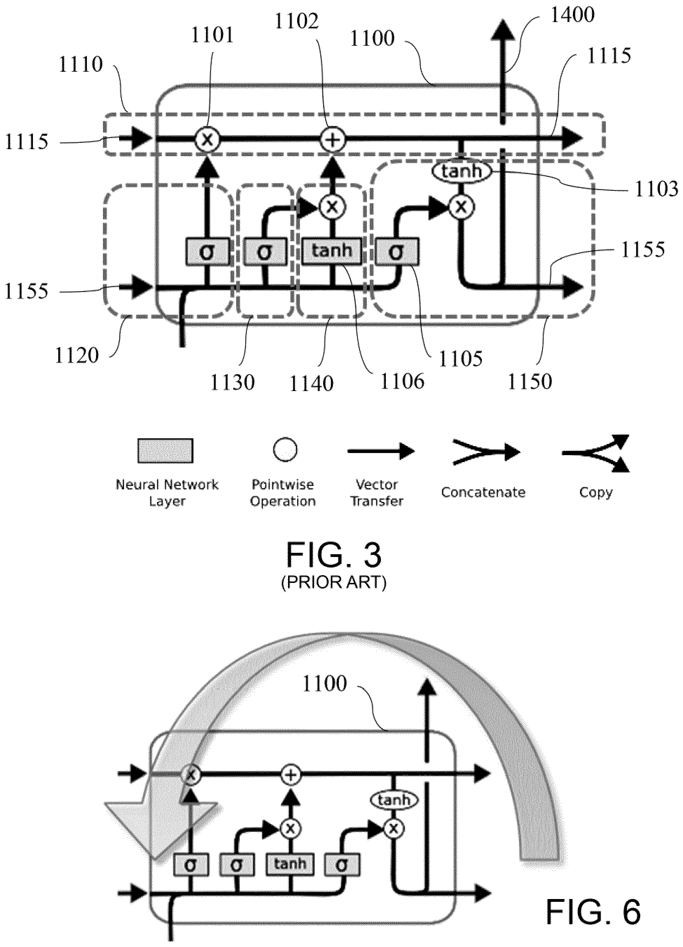

With reference to figure 3, the key of the module of the LSTM network shown in figure 2 is the so-called "cell state" 1110, the horizontal line running through the upper part of the diagram, crossing the whole chain and accumulating contributions of the other nodes:
- The "forget gates" 1120 determine the past information to be stored and propagated;
- The "input gates" 1130 and "cell gates" 1140 select significant information of the inputs and assign a certain importance to the data, respectively; and
- The "output gate" 1150 finally determines the current classification and historical information to be transferred to the subsequent levels of the Neural Network.

Functions 1101, 1102, 1003, 1005, and 1106 are as follows.

Function 1101: Hadamard product (multiplication of vectors element by element); this function operates on matrices having the same size and produces a third matrix having the same size as the input ones.

Function 1102: sum of matrices, this function operates on matrices having the same size and produces a third matrix having the same size as the input ones.

Function 1103: "state activation" function, an activation function to update the cells and hidden layers of the neural network, it can be implemented in at least one of the following manners: hyperbolic tangent y = tanh(x) or softsign function y = softsign(x) = x/(1+|x|).

Function 1105: "gate activation" function, an activation function to update the "gates", it can be implemented in at least one of the following manners: sigmoid function y = 1/(1+e^(-x)) or hard-sigmoid function y = 0 if x < -2.5, y = 0.2*x + 0.5 if -2.5 <= x <= 2.5, y = 1 if x > 2.5.

Function 1106: equal to function 1103.

The output is 1115 for the cell state and contains information learned from the current and previous iterations of the neural network. At each iteration of the neural network, the LSTM layer either adds or removes information to/from the "cell state" by means of "gates".

The output is 1555 for the "hidden state" and contains the output of the LSTM layer for each iteration of the neural network. This information is used both to determine the final prediction of the neural network for each time instant and to feed the LSTM layers of the subsequent iterations of the neural network.

In the state of the art, Neural Networks are mainly implemented on GPU- and CPU-based systems. These solutions, although more flexible and readily usable, are inadequate in embedded and/or portable applications in which there are stringent mechanical dimension and power consumption requirements; for these reasons, FPGA devices are best suited.

The FPGA programmable logics require specific skills to be properly configured, and the cost and development times can be greater than CPU/GPU counterparts. Technologies for the inference of Neural Networks on FPGAs are continually evolving; however, they are all oriented towards generalizing the criteria for automating the FPGA synthesis process starting from an already modeled Network, resulting in unknowns on the actual ability to embed the Network in physical devices.

The need is thus felt to provide an FPGA device in which the use of neural networks is such that performance and necessary resources can be exactly known in advance.

### Purpose and object of the invention

The present invention aims to provide a method based on a neural network on an FPGA device, which completely or partially solves the problems and overcomes the drawbacks of the prior art.

The object of the present invention is an FPGA method and device according to the appended claims.

### Detailed description of embodiments of the invention

### List of figures

The invention will now be described by way of nonlimiting illustration, with particular reference to the figures in the accompanying drawings, in which:
- figure 1 shows a simplified diagram of a recursive neural network according to the prior art;
- figure 2 shows a simplified diagram of an LSTM Network, in which each module is in turn structured into 4 different levels of Neural Networks interacting with one another, according to the prior art;
- figure 3 shows a module of the network in figure 2, in greater detail;
- figure 4 shows an exemplary diagram of a processing series of expert algorithms according to an embodiment of the invention;
- figure 5 shows a neural network or LSTM expert algorithm which relies on cooperation techniques therein, involving individual levels (intra-cooperation) and different levels (inter-cooperation), according to the prior art;
- figure 6 diagrammatically shows a hardware resource reuse, in which the FPGA programmable logics allow the grids making up the individual levels as in figure 5 to be compacted into small cores, according to an aspect of the invention;
- figure 7 diagrammatically shows how different levels of the fully connected Neural Network in figure 4 do not work in a compartmentalized manner, instead, the flow of data is managed and optimized with a global view of the overall Neural Network, according to an aspect of the invention; and
- figure 8 shows a time subdivision (abscissas, where 1, 2, 3, ... indicate the calculation cycles) of the operations of multiple LSTM logic levels into a limited number of FMAs (6, grouped on the ordinates on a case-by-case basis) and related LSTM sub-blocks implemented on FPGA.

It is specified herein that elements of different embodiments can be combined together to provide further embodiments without restrictions respecting the technical concept of the invention, as a person of average skill in the art effortlessly understands from the description.

The present description further relates to the prior art for the implementation thereof, as for the detail features not described, such as elements of minor importance usually used in the prior art in solutions of the same type, for example.

When an element is introduced, it is always understood that there can be "at least one" or "one or more".

When a list of elements or features is given in this description, it is understood that the finding according to the invention "comprises" or alternatively "consists of" such elements.

When listing features within the same sentence or bulleted list, one or more of the individual features can be included in the invention without connection with the other features in the list.

Two or more of the parts (elements, devices, systems) described below and claimed can be freely associated and considered as kits of parts according to the invention.

### Embodiments

In the field of Artificial Intelligence, one of the main topics relates to inference, i.e., the Hardware materialization of trained Neural Networks. The particularity of the invention is the ability to use the IP Core on small-size FPGA devices, or more generally to use limited Hardware resources of existing programmable logics originally used for other purposes. Commonly, Neural Networks are physical resource intensive, and are trained and implemented on CPU- or GPU-based machines as relatively simple architectures and more straightforward solutions. However, the requirements of military missile-level applications, or more generally of embedded and/or portable system applications, are highly challenging in several respects: security, secrecy, accuracy, computation time, mechanical footprint, energy and thermal efficiency; for these contexts, FPGAs remain the most suitable devices.

Possible applications of the IP Core include radar target classification, signal monitoring, fault prediction, acoustic (noise, voice) recognition/synthesis, and biomedical signal classification.

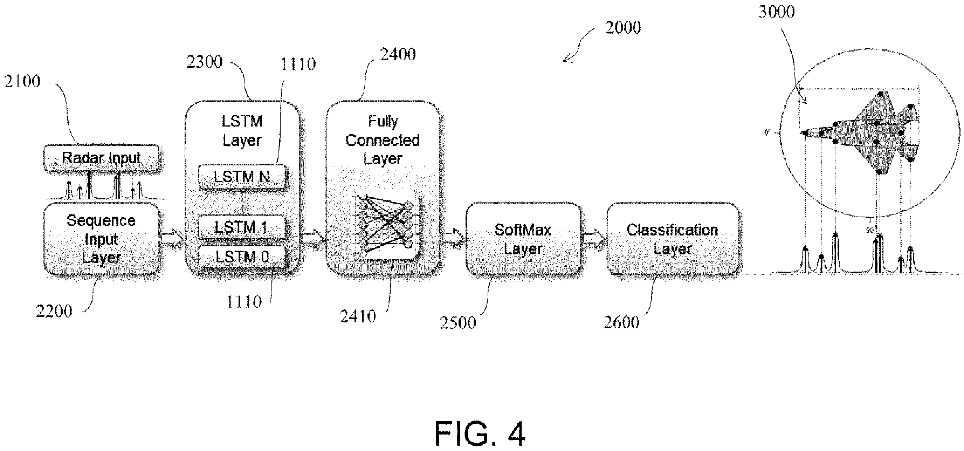

According to the invention, and referring to figure 4, an FPGA is used to implement a multi-level Recursive Neural Network. The analysis of the flow of information within the Neural Network allows identifying the processing time dependencies, allowing the network to be optimally partitioned into serial and parallel computations. The fact of employing internal blocks for a subsequent computation when the current one is at the last stages is implementable as such in GPUs. However, the invention uses a real pipeline with a series of registers to time the individual operations. Although the operations are always the same as those indicated above in the LSTM block, a table of weights can be stored to exclude some as needed, according to an aspect of the invention.

In the case of radar recognitions, the system 2000 comprises block 2100 which provides the radar tracks of an aircraft 3000 to block 2200 which reconfigures them into a sequential input, which ends in the LSTM macroblock 2300, where there are N modules LSTM 0, LSTM 1, ..., LSTM N, the output processing of which is the input to a block 2400 of fully connected network 2410. The softmax block 2500 is directly connected to the output of the fully connected network, followed by the classification block 2600.

More specifically, in the case of radar recognitions, the system 2000 comprises block 2100 which provides radar tracks of the observed object 3000; the purpose of the network is to recognize the type of object to which the acquired radar returns belong. The radar tracks are reconfigured from a block 2200 into a sequential input which ends up in the LSTM macroblock 2300, in which there are N modules LSTM 0, LSTM 1, ..., LSTM N, the output processing of which is the input to a block 2400 of fully connected network 2410. The softmax block 2500 is directly connected to the output of the fully connected network, and finally there is the classification block 2600, which is capable of identifying that object 3000 whose radar return was processed is an aircraft.

Block 2200: it feeds the neural network with inputs of a sequential nature, time data series. In the case of radar returns, the sequence consists of the information that the radar acquires over time.

Block 2300: the LSTM block that learns short- and long-term dependencies between time instants and processed data sequences by means of additive interactions performed over time, characterized during the training of the neural network.

Block 2400: the fully connected layer multiplies the inputs with a weight matrix W and adds a bias vector B. Both the matrix W and the vector B are coefficients obtained by training the neural network.

Block 2500: the softmax function (also referred to as a normalized exponential function) is applied to the input data. The block compresses the input vector of arbitrary real values into an equally dimensioned vector of normalized values in an interval (0,1) the sum of which is 1.

Block 2600: it determines the association between the sequence of processed data by the neural network and the belonging to a certain class of possible outputs. In the example of radar tracks, the network is capable of classifying the acquired radar return into a particular type of aircraft/missile/flying object, as long as the network has been trained to recognize that particular type of target.

By means of serial computations it is possible to reuse the same Hardware resources to perform different processing operations within the same computation cycle, and/or process information on temporally different computation cycles. This results in advantages in terms of resources used and management of multiple information.

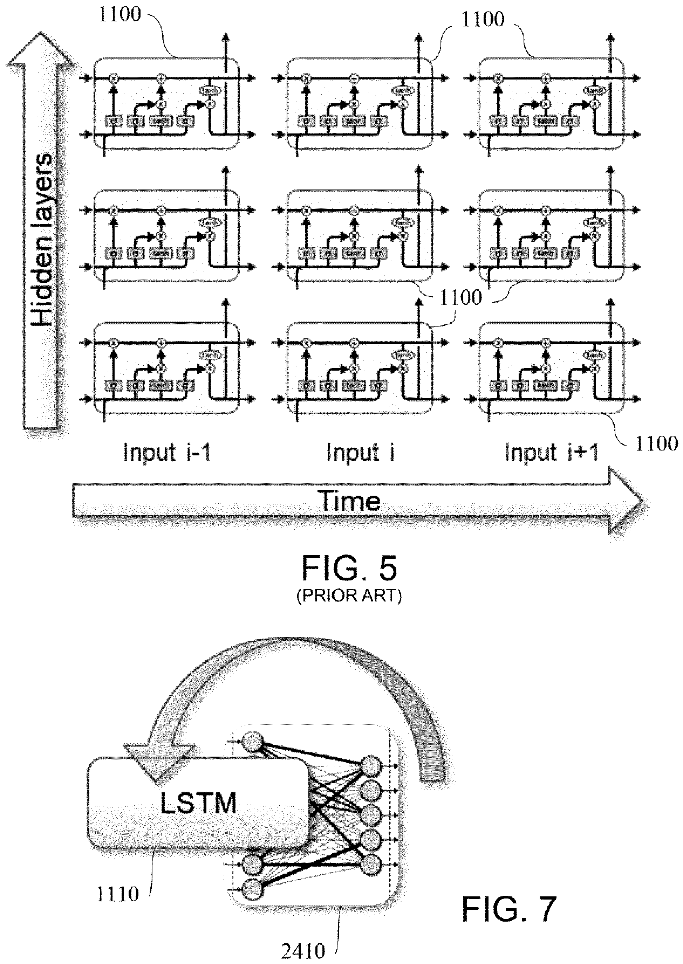

With reference to figure 5, parallel processing operations allow various tasks of the Neural Network to be performed simultaneously. The calculations performed in the acquired data time chain are represented horizontally, while the calculations performed by the hidden layers for each time instant are represented vertically. Therefore, all the historical information of the neural network, including data obtained during the learning step of the network and data related to past acquisitions of the neural network during an operational scenario, travels horizontally. The data allowing the processing of the current acquisition information in order to perform the current classification/prediction and decide which information to pass for subsequent acquisitions travel vertically.

Thus, the time series of data are provided to hidden layers of network modules, which serially pass the information so that the processing at time ti benefits from the result of processing of the various hidden layers at time *tᵢ₋ₗ.* Each block waits until it has all the inputs to move forward, and then the network automatically balances itself from the perspective of processing time to achieve the final result.

Stated more formally, the invention aims to classify data of a predetermined number *T* of objects, using artificial intelligence implemented on FPGA. The following steps of the prior art are performed:
A. providing in 2100,2200 a time series of input data related to said objects;
B. processing in 2300 said time series of data by means of an LSTM expert algorithm 1100 with a predetermined set of blocks on N levels of LSTM hidden layers, with *N* > 1, each LSTM block providing at least one output intended for the subsequent layer and at least one output intended for a block on the same hidden layer level to which the data of a subsequent time instant are provided as input, and where each LSTM block comprises a series of operational sub-blocks which process the input data. This is exactly the situation in Figure 5. The invention compacts the calculation means at least by reducing the number of columns, i.e., a single series of hidden layers processes data at the various time instants, as will be discussed in detail below.

For this purpose, the LSTM blocks and operational sub-blocks shown in figure 3 are used iteratively, with each iteration producing the results 1115 and 1155, as will be detailed later.

The final result of the whole network in figure 4 is the possibility to associate a sequence of input data with a specific class, classifying the input data and obtaining the prediction for which the network was trained. The network architecture is not application-dependent; training is done at a step before the neural network is used and produces the coefficients that populate the structure of the implemented network. Possible examples: radar track input, the neural network determines the type of object being observed (a particular type of aircraft, missile, other types of aircraft); apparatus voltage/absorption value input, the neural network is capable of detecting the nominal behavior of the system or anticipating a possible system fault; electrocardiogram input, the neural network determines whether the patient is healthy or needs to undergo a particular clinical test.

This results in advantages in terms of calculation time. The features of the Neural Network are configurable so as to suit specific usage scenarios. The network configuration depends on both the application and the available hardware. The trade-off to be made is between network performance and required hardware resources, the suggested neural network can be configured to balance these two aspects as needed. For example, if the application requires classifications and predictions very quickly, or the application has a wide variety of possible outputs, the neural network can meet these performance requirements by occupying more space on the hardware which will host the implemented architecture. Conversely, if the hardware available to run the application is extremely limited, the neural network can be configured to minimize the resources required at the cost of increasing the calculation times. Intermediate configurations which balance the trade-off between performance and required hardware resources are also available. Each configuration is characterized in every aspect, making the performance and required resources known in advance.

As shown above, the neural network or expert algorithm implemented is based on cooperation techniques within the Neural Network involving individual layers (intra-cooperation) and different layers (inter-cooperation).

Returning to Figure 5, a logic view of the implemented LSTM neural network is shown. The LSTM layers, which process data over time, develop horizontally, while the hidden layers of the network, i.e., the various processing operations that the network performs for each input datum, develop vertically. For example, if we consider 3 time instants (input data sequence of 3 samples) and a neural network consisting of 3 hidden layers, in total there are 3*3=9 LSTM processing operations, the structure of which is identical for the 9 LSTM blocks, but each has its own inputs and coefficients determined during training. Therefore, from the logic point of view, the LSTM cores process data sequentially along the timeline and along the sequence of "hidden layers".

With reference to figure 6, the FPGA programmable logics allow the grids which form the individual layers to be compacted into small Cores, making wide reuse of Hardware resources. Indeed, considering that the structure of the LSTM block is identical across the various blocks in figure 5, the resulting block can partition its resources over time, e.g., by having the "state activation" function of the first hidden layer run at the same time as the "gate activation" function of the second hidden layer. Similarly, it can be seen inside the block that while the central area of the LSTM is processing the data of the second time instant, the last blocks of the network are completing the computations of the first sample, and the first blocks of the network are already processing the last acquired sample.

To this end, the starting point is a time series 2100,2200 of input data related to said objects and the processing 2300 by means of an LSTM expert algorithm, which is schematized as such with a predetermined set of LSTM logic blocks 1100 on *N* logic levels of LSTM hidden layers, with *N* integer greater than 1, each LSTM logic block providing at least one output intended for the subsequent layer and at least one output intended for an LSTM logic block at the same hidden layer level to which data of a subsequent time instant are provided as input, in which each LSTM logic block comprises a set of LSTM operational logic sub-blocks which process the input data as well as *K* logic units of multiplication-addition referred to as FMA units so that the *N* logic levels of LSTM hidden layers comprise *N•K* FMA units, where *K* is an integer greater than 1. Usually *K* = 3, but this is not limiting in this description. Furthermore, although only one LSTM logic block per layer is possible, usually two or more are used, in particular three, corresponding to three different time instants in the series of input time data.

The distinction between logic blocks or levels and blocks or levels implemented on FPGA has to be clear here. Indeed, the inputs and outputs of the algorithm remain the same, but the processing of data is carried out on a series of FPGA physical blocks which are not in bijection with the logic blocks, despite respecting them as a whole.

The physical blocks implemented on FPGA are a fraction of the logic ones in order to occupy less space on FPGA. This slightly increases the calculation time but dramatically decreases the space for the hardware resources required on FPGA and thus the power consumption to perform the expert algorithm calculations.

The following step is also performed in the logic expert algorithm:
D. once all the *N* LSTM outputs corresponding to the *N* logic levels of LSTM hidden layers are available in a memory, providing said *N* LSTM outputs (1115,1155) to a fully connected neural network (2400) configured to provide *T* recognition values corresponding to the predetermined number *T* of objects.

Such a step, and generally the logic algorithm, is implemented on FPGA more specifically as follows: the *N* logic levels of LSTM hidden layers are globally implemented on FPGA so that:
- there is an integer number *M* of FMA units implemented on FPGA with which corresponding sets of LSTM operational sub-blocks implemented on FPGA are associated, the calculations of the *N•K* FMA logic units and the sets of operational logic sub-blocks of said *N* logic levels of LSTM hidden layers being distributed in pipelines on the *M* FMA units and the corresponding sets of LSTM operational sub-blocks, with *M* being an integer and 1 ≤*M* < *N;*
- each of the *M* FMA units implemented on FPGA and the corresponding sets of LSTM operational sub-blocks performs a corresponding portion of the calculations of said *N* logic levels of LSTM hidden layers in pipelines according to the following substeps of step B:
   B1. receives data of an LSTM logic block as input, which block has processed a hidden layer of lower level as compared to data of a given time instant and of equal level as compared to data of a time instant prior to said given time instant;
   B2. processes the input data so that when the FMA unit implemented on FPGA and/or the corresponding set of LSTM operational sub-blocks implemented on FPGA have already processed data of a given hidden layer or time instant, they receive and process data of subsequent LSTM logic hidden layer or time instant, respectively;
   B3. provides the outputs of one or more LSTM logic hidden layers for subsequent time instants of the time series of data.

In practice, the choice of the value *M* can be made by the designer according to how many FPGA resources he/she wants to employ. Some examples are given below.

According to an aspect of the present description, each of the *M* FMAs and corresponding LSTM sub-blocks implemented on FPGA can sequentially perform calculations of respective one or more assigned hidden layers so as to compact the structure in figure 5 vertically. Each of the *M* FMAs and corresponding LSTM sub-blocks implemented on FPGA can sequentially perform calculations related to the data of subsequent time instants so as to compact the structure in figure 5 horizontally.

Thereby, each FMA and operational sub-block are always continuously or almost continuously utilized to do a necessary subsequent calculation, without waiting for the entire block to have processed a level or time instant.

The following further step is performed between step B and step D:
C. storing the LSTM outputs of the *N* logic levels of LSTM hidden layers, provided by the *M* FMA units implemented on FPGA and the corresponding sets of operational sub-blocks implemented on FPGA, for the data of a given time instant on a series of first conciliation registers implemented on FPGA;
where said one memory of step D comprises said series of first conciliation registers implemented on FPGA.

From the above, it is apparent that the various logic FMAs are not bijectively mapped to separate hardware units, but a number of FMA units which do the calculations of all the others is fixed. If, on the other hand, all logic FMA units were implemented on FPGA, much more space would be occupied and thus the aforementioned energy saving would not be achieved.

According to an aspect of the present description, the following step is performed after step D:
F. compressing the output values of step D into a normalized range of values (2500).

According to a further independent aspect of the present description, the following subsequent step is performed:
G. assigning a type of recognized objects to the normalized values of step F.

The reduced mapping above can be variously declined.

For example, *M* can be less than or equal to the nearest integer to 5% of *N* for an energy saving-oriented implementation, in particular as an extreme case *M* = 1.

Another example is that in which *M* is equal to the nearest integer to a predetermined percentage in the range 40-60% of *N* for a calculation speed-oriented implementation.

Another example is that in which *M* is equal to the nearest integer to a predetermined percentage in the range 20-30% of *N* for a balanced performance-oriented implementation with respect to computation time and energy saving.

As a practical numerical example, 6 FMA blocks and 24 hidden layers can be available. Each FMA block performs the operations of 24/6 LSTM blocks (FMA 1 performs LSTM 1,7,13,19) and the vector operations associated with the respective LSTM blocks.

Thereby, and also referring to figure 7, the different levels of the Neural Network do not work in a compartmentalized manner, instead, the flow of data is managed and optimized with a global view of the LSTM Neural Network. Based on the time dependencies forming the Neural Network, calculations are anticipated waiting for the availability of new inputs and/or partial processing operations of the Network itself.

Indeed, even the fully connected network hardware can be compacted, according to an aspect of the invention. For this purpose, according to a further independent aspect of the present invention, in step D the fully connected neural network has an input layer with *M* input neurons implemented on FPGA which implement *N* logic neurons and an output layer with *O* output neurons implemented on FPGA, where *O* is an integer ≥ 1, and where:
- each of the *M* input neurons implemented on FPGA performs in sequence a portion of calculations related to said *N* logic neurons for a given time instant, the input layer providing *N* logic outputs to each of the *O* neurons of the output layer or to the neurons of a subsequent deep layer of the fully connected neural network;
- *O* ≤ *T,* each of the *O* output neurons implemented on FPGA performing in sequence calculations related to one or more assigned values of said *T* values once the *N* logic outputs of the input layer or the outputs of a preceding deep level of the fully connected neural network for said given time instant are received;

and where, if step F above is performed, the following step is performed at the end of step D:
   E. storing the outputs of the *O* neurons implemented on FPGA corresponding to the *T* recognition values for said given time instant on a series of second conciliation registers implemented on FPGA;
where step F is performed once all *T* recognition values are stored.

In practice, any implemented neuron can sequentially do the work of multiple neurons in the logic network consisting of *N* input neurons and *T* output neurons. The fully connected network may even not have deep layers.

Again, the above applies to the possible values of *M.*

It is also possible that *O* = 1, or multiple output neurons but fewer than *T*, for similar resource-saving reasons.

Furthermore, the present description provides an FPGA device configured to perform the described method.

With reference to figure 4, the last level of the neural network deals with classification/prediction. The core implemented according to the invention is capable of performing classifications or predictions based on a sequence of data. Downstream of proper training, the Neural Network is capable of handling a time sequence of information of any nature (radar returns, voltages, current draws, state machine evolutions, audio signals, electrocardiographic traces, and so on).

To summarize very briefly, the Neural Network begins with a "sequence input" level 2200, followed by the LSTM level 2300, consisting, in turn, of a series of hidden layers.

The "fully connected" level 2400 compacts the outputs of the previous level to the subsequent "softmax" level 2500, which assigns a score to each possible classification/prediction. The score is used in 2600 to determine the success rate with which the Neural Network performs classification/prediction.

The FPGA device resulting from one or more of the above options is a device configured to perform the method according to the invention.

### Practical embodiment

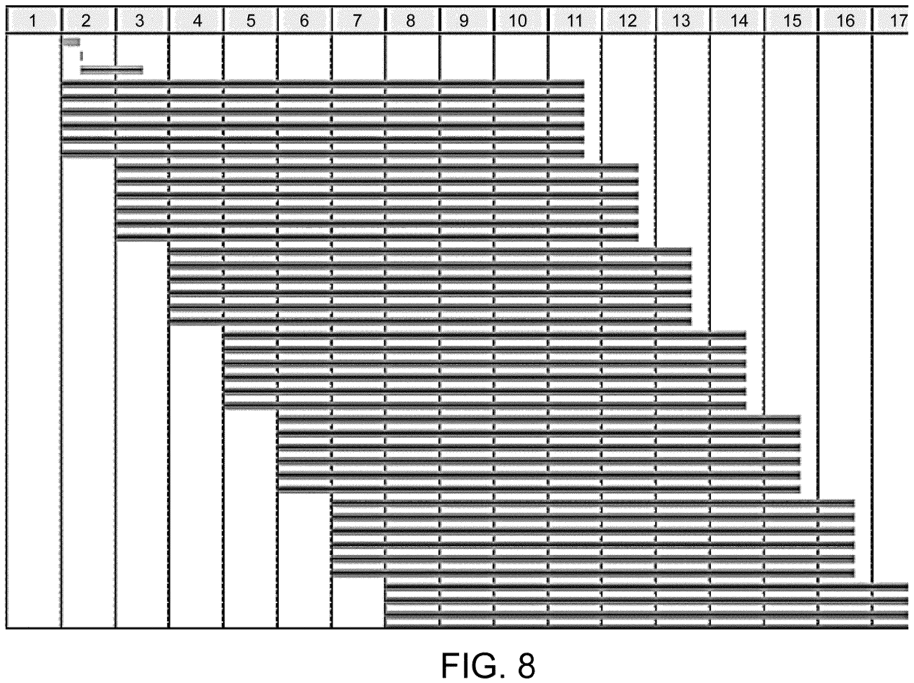

Figure 8 shows the implementation feature in which the resources are used over time and shared between different operations.

The groups of operations performed over time are shown from top to bottom, the time instants at which the processing operations takes place (computational cycles) are numbered horizontally.

The basic operations are multiplications followed by additions (each depicted with a green rectangle). Each of these operations requires a specific number of processing cycles (in this specific case, 10 processing cycles) .

By virtue of the series of internal FPGA registers, each operation is divided into pipelines so that it is possible to overlap the execution of multiple operations, staggered over time: in this specific case, the first six operations are initiated during the computation cycle 2 and end at the computation cycle 11 (they are carried out on six FMA blocks cooperating in parallel at the same time).

The subsequent six operations begin during the calculation cycle 3 and end at the calculation cycle 12. By virtue of the internal registers of the FMA operation(multiplication-addition units), the hardware used for the 12 operations is the same.

Similarly for the subsequent operations, they are performed on the same hardware, staggering the start of one computing cycle every 6 operations.

Such an implementation is allowed by the logic independence of FMA calculations. Within the FMA block, instead, this cannot be applied because the multiplier must have terminated in order to perform the addition operation.

The diagram shown in figure 8 is made possible by grouping FMA operations and isolating the independent operations, whereby the neural network topology is not implemented by mapping elements one by one onto atomic hardware resources, but the overall network is managed by identifying the operations according to the aforesaid criteria.

For example, from the topological point of view, in the neural network there are N LSTM blocks, the Fully Connected level, etc.. In hardware, there is not any computational cell for each of the N LSTM blocks or the FC level, but there are many hardware elements depending on the needs of the end user of the network. Indeed, the feature of the proposal is the high scalability of hardware occupation dictated by the designer's needs. In figure 8, the architecture is constrained to an example number of 6 FMA elements. In the case of greater resource availability, such a value can be changed and increased, thus obtaining a greater area consumption, to the benefit of less computation time made possible by virtue of greater parallelism.

FMA operations are generally identified to:
- process the input data to the network for feeding all LSTM logic blocks on the size of the hidden layers;
- process all the outputs of the LSTM logic blocks on the size of the hidden layers for the same hidden layers of the subsequent time layer;
- process the "cell states" of all LSTM logic blocks;
   and
- process the cells of the fully connected layer.

### Results of practical tests

Table 1 below shows various possible configurations of the neural network, with the target FPGA that will host the neural network being the same. The first row of the table shows the configuration with the least demand for hardware resources and the most calculation time. The last row contains the configuration with the best time performance at the cost of increased usage of hardware resources.

"Latency" is the computational latency and indicates how many clock pulses of the FPGA are required by the neural network to perform the classification/prediction.

"Interval" is the calculation interval and indicates how many clock pulses of the FPGA are required by the neural network for a new input sample and to generate a new prediction/classification.

"BRAM" indicates the demand for hardware on FPGA, in particular it relates to Block RAM memory elements.

"DSP" indicates the demand for hardware on FPGA, in particular it relates to Digital Signal Processing computational elements.

"FF" indicates the demand for hardware on FPGA, in particular it relates to Flip Flop registers.

"LUT" indicates the demand for hardware on FPGA, in particular it relates to Look-Up Table elements.

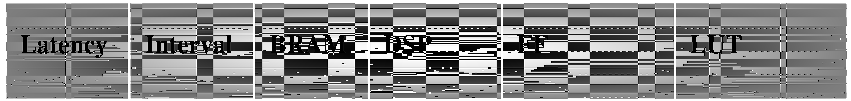

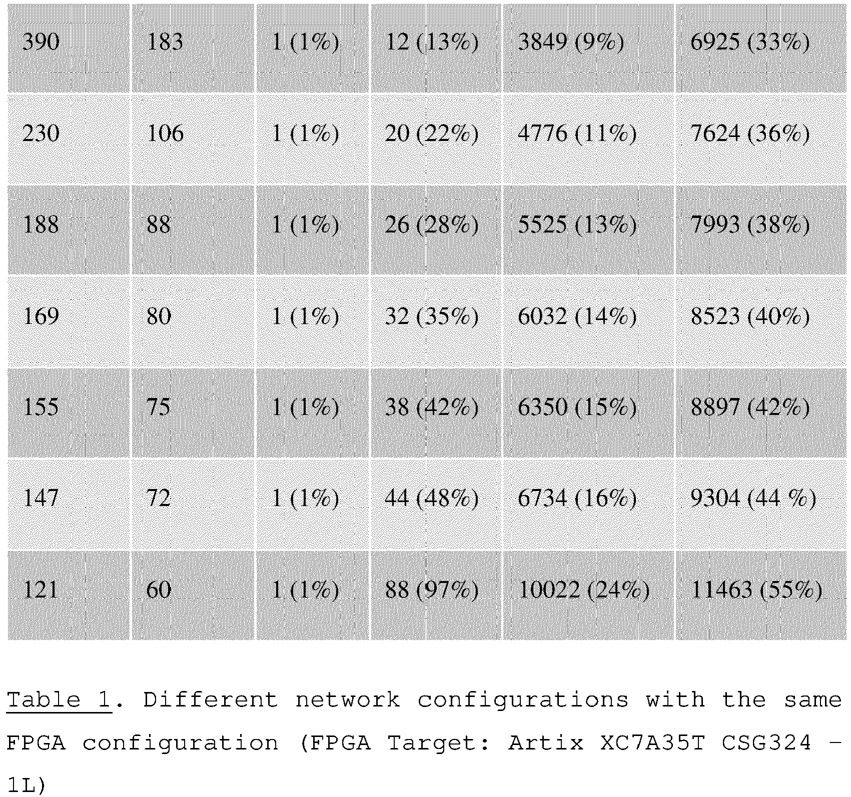

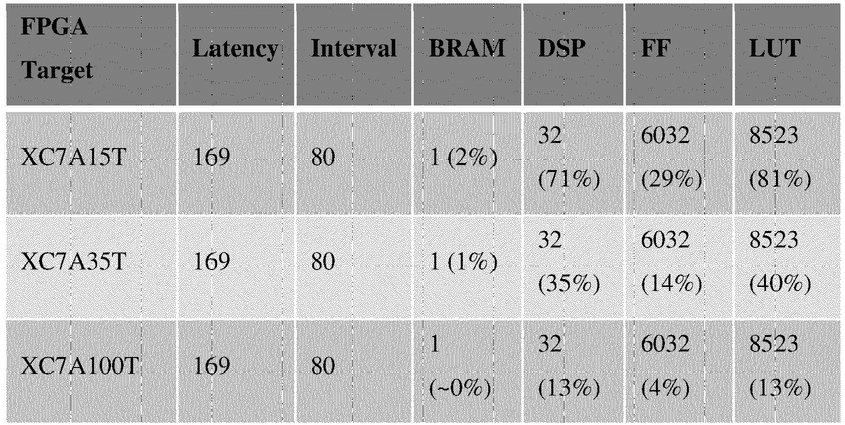

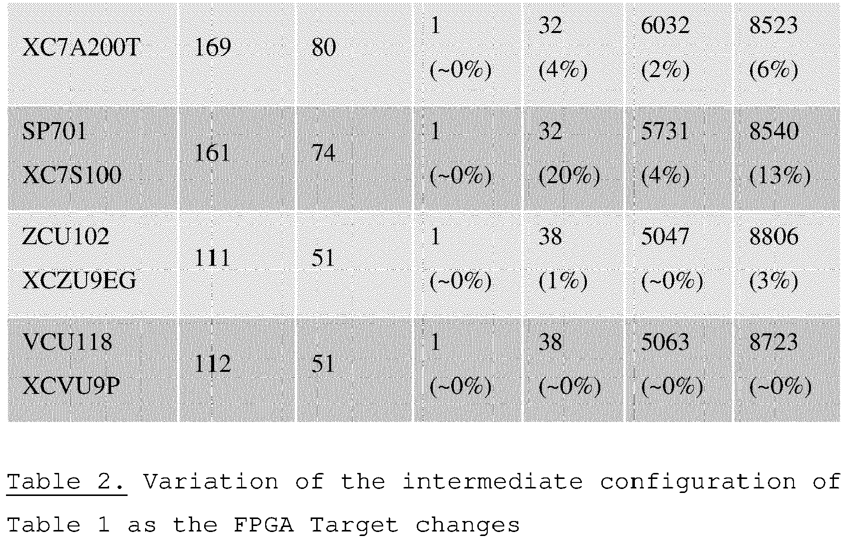

In Table 3 below, the two extreme configurations (minimum hardware, maximum performance) for different types of target FPGA are provided.

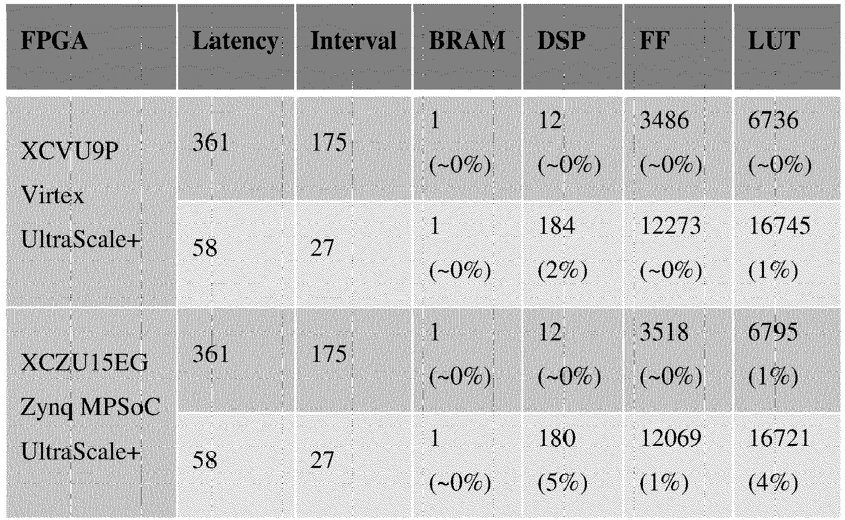

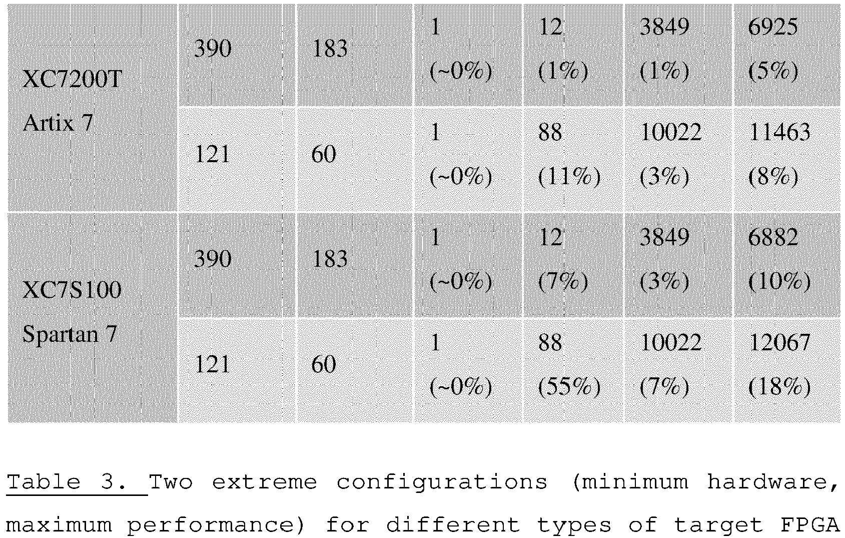

It is apparent from the tables presented here that on some commercial FPGAs it is possible to have energy uses of hardware resources close to 0% (also having calculation times of the order of microseconds), which however could not happen with a GPU since all the internal elements thereof would be indifferently energized during each instant of use.

Thereby, the LSTM network-based architecture is particularly effective for inference on FPGA, achieving high performance and low hardware resource requirements. The analysis of sequential data by ad-hoc designed processing operations allows a wide reuse of FPGA resources. Alternatives such as CPUs and GPUs are capable of performing the same type of processing operations but not with the same features achievable on FPGAs; although some operations can be parallelized, the sequential nature with which the cores execute the instructions forces CPUs and GPUs to take longer calculation times for each iteration of the network, thus increasing both latency and calculation interval. Furthermore, the predetermined structure of CPUs and GPUs does not allow utilizing the architectural features of the neural network to reuse the calculation elements, requiring more hardware even if left unused. Moreover, processor-based architectures require higher power consumption, higher heat dissipation capacity, and larger mechanical dimensions compared to FPGAs. FPGAs ensure higher security levels since it is impossible to derive confidential information by means of reverse engineering.

### Advantages of the invention

Among the advantages of the invention, the following can be mentioned:
• Data Link function:
   - Prediction of the future state starting from the current one and from input signals
   - Signal monitoring and fault prediction
• Seeker function:
   - Classification of radar targets
• Seeker Front End function (Gimbal led Antenna and AESA):
   - Scenario predictions for sensor and actuator reconfiguration
   - Training and prediction as an alternative to LUT and characterization
   - Structural frequency recognition for the use of adaptive filters; and
• Advantages for future designs:
   - The application designer has a plug-and-play deep learning IP Core available, with necessary hardware resources and time performance known in advance.

Preferred embodiments have been described above and some variants of the present invention have been suggested, but it should be understood that those skilled in the art can make modifications and changes without departing from the relevant scope of protection, as defined by the appended claims.

## Claims

1. A data classification method (2000) for a predetermined number T of objects, wherein the following steps are performed:
A. providing (2100,2200) a time series of input data related to said objects;
B. processing (2300) said time series of data by means of an LSTM expert algorithm (1100) with a predetermined set of LSTM logic blocks on *N* logic levels of LSTM hidden layers, with *N* being an integer greater than 1, each LSTM logic block providing at least one output intended for the subsequent layer and at least one output intended for an LSTM logic block on the same hidden layer level to which data of a subsequent time instant are provided as input, wherein each LSTM logic block comprises a set of LSTM operational logic sub-blocks which process the input data as well as *K* logic units of multiplication-addition referred to as FMA units, so that the *N* logic levels of LSTM hidden layers comprise *N•K* FMA units, where *K* is an integer greater than 1;
D. once all the *N* LSTM outputs corresponding to the *N* logic levels of LSTM hidden layers are available in a memory, providing said *N* LSTM outputs (1115,1155) to a fully connected neural network (2400) configured to provide *T* recognition values corresponding to the predetermined number *T* of objects;
the method being **characterized in that** the *N* logic levels of LSTM hidden layers are globally implemented on FPGA so that:
- there are an integer number *M* of FMA units implemented on FPGA with which corresponding sets of LSTM operational sub-blocks implemented on FPGA are associated, the calculations of the *N•K* FMA logic units and the sets of operational logic sub-blocks of said *N* logic levels of LSTM hidden layers being distributed in pipelines on the *M* FMA units and the corresponding sets of LSTM operational sub-blocks, with *M* being an integer and 1 ≤*M < N;*
- each of the *M* FMA units implemented on FPGA and the corresponding sets of LSTM operational sub-blocks performs a corresponding portion of the calculations of said *N* logic levels of LSTM hidden layers in pipelines according to the following substeps of step B:
B1. receives data of an LSTM logic block as input, which block has processed a hidden layer of lower level as compared to data of a given time instant and of equal level as compared to data of a time instant prior to said given time instant;
B2. processes the input data so that when the FMA unit implemented on FPGA and/or the corresponding set of LSTM operational sub-blocks implemented on FPGA have already processed data of a given hidden layer or time instant, they receive and process data of a subsequent LSTM logic hidden layer or time instant, respectively;
B3. provides the outputs of one or more LSTM logic hidden layers for subsequent time instants of the time series of data;
and wherein the following further step is performed between step B and step D:
C. storing the LSTM outputs of the *N* logic levels of LSTM hidden layers, provided by the *M* FMA units implemented on FPGA and the corresponding sets of operational sub-blocks implemented on FPGA, for the data of a given time instant on a series of first conciliation registers implemented on FPGA;
and wherein said memory of step D comprises said series of first conciliation registers implemented on FPGA.

2. A method (2000) according to claim 1, wherein the following steps are performed after step D:
F. compressing the output values of step D into a normalized range of values (2500).

3. A method (2000) according to claim 2, wherein the following subsequent step is performed:
G. assigning a type of recognized objects to the normalized values of step F.

4. A method (2000) according to one or more of claims 1 to 3, wherein in step D the fully connected neural network has an input layer with *M* input neurons implemented on FPGA which implement *N* logic neurons and an output layer with *O* output neurons implemented on FPGA, where *O* is an integer ≥ 1, and wherein:
- each of the *M* input neurons implemented on FPGA performs in sequence a portion of calculations related to said *N* logic neurons for a given time instant, the input layer providing *N* logic outputs to each of the *O* neurons of the output layer or to the neurons of a subsequent deep layer of the fully connected neural network;
- *O* ≤ *T,* each of the *O* output neurons implemented on FPGA performing in sequence calculations related to one or more assigned values of said *T* values once the *N* logic outputs of the input layer or the outputs of a preceding deep level of the fully connected neural network for said given time instant are received;
and wherein, if step F of claim 2 is performed, the following step is performed at the end of step D:
E. storing the outputs of the *O* neurons implemented on FPGA corresponding to the *T* recognition values for said given time instant on a series of second conciliation registers implemented on FPGA;
where step F is performed once all *T* recognition values are stored.

5. A method (2000) according to claim 4, wherein *M* is less than or equal to the nearest integer to 5% of *N* for an energy saving-oriented implementation.

6. A method (2000) according to claim 5, wherein *M* = 1.

7. A method (2000) according to claim 4, wherein *M* is equal to the nearest integer to a predetermined percentage in the range 40-60% of *N* for a calculation speed-oriented implementation.

8. A method (2000) according to claim 4, wherein *M* is equal to the nearest integer to a predetermined percentage in the range 20-30% of *N* for a balanced performance-oriented implementation with respect to computation time and energy saving.

9. A method (2000) according to one of the claims 4 to 8, wherein *O* < *T.*

10. A method (2000) according to claim 9, wherein *O* = 1.

11. An FPGA device configured so as to perform the method according to one or more of claims 1 to 10.
